# EUROPEAN PATENT SPECIFICATION

(11) **EP 2 873 650 B1**
(45) Date of publication and mention of the grant of the patent: **29.04.2020**
(21) Application number: 13816408.2
(22) Date of filing: 08.07.2013
(51) Int. Cl.: C02F 1/44, B01D 63/00, B01D 63/08, B01D 69/06

(54) **ELEMENT UNIT, SEPARATION MEMBRANE MODULE, AND METHOD FOR CONNECTING/DISCONNECTING SEPARATION MEMBRANE ELEMENT**
ELEMENTEINHEIT, TRENNMEMBRANMODUL UND VERFAHREN ZUM VERBINDEN/LÖSEN EINES TRENNMEMBRANELEMENTS
ÉLÉMENT UNITAIRE, MODULE DE MEMBRANES DE SÉPARATION ET PROCÉDÉ POUR CONNECTER/DÉCONNECTER UN ÉLÉMENT DE MEMBRANES DE SÉPARATION

(30) Priority: 10.07.2012 JP 2012154336; 27.07.2012 JP 2012167617
(43) Date of publication of application: 20.05.2015
(73) Proprietor: Toray Industries, Inc., Tokyo 103-8666 (JP)
(72) Inventor: KITANAKA, Atsushi, Otsu-shi Shiga 520-8558 (JP); WATANABE, Yasuharu, Otsu-shi Shiga 520-8558 (JP); FURUNO, Shuji, Otsu-shi Shiga 520-8558 (JP); ODAKA, Yoshifumi, Otsu-shi Shiga 520-8558 (JP); KANTANI, Seiko, Otsu-shi Shiga 520-8558 (JP); ANDO, Hideaki, Otsu-shi Shiga 520-8558 (JP)
(74) Representative: Hoefer & Partner Patentanwälte mbB
(86) International application number: PCT/JP2013/068639
(87) International publication number: WO 2014/010554

(56) References cited:
- EP-A1- 2 228 124
- EP-A1- 2 818 230
- WO-A1-02/20142
- WO-A1-2007/122839
- WO-A1-2008/117783
- JP-A- H0 731 857
- JP-A- H0 938 471
- JP-B2- 3 574 539
- JP-U- H0 426 089
- US-A1- 2005 023 207
- US-A1- 2011 000 840

## Description

### Technical field

The invention relates to a separation membrane module and a separation module unit suitable in food industry fields and water treatment fields, including drinking water production, water purification treatment, waste water treatment, etc.

### Background art

In recent years, separation membranes in the forms of flat membranes and hollow fiber membranes have come to be used in water treatment fields and food industry fields. For example, a membrane element in which a separation membrane is disposed, and a membrane module in which a plurality of membrane elements are disposed are used in water purification treatment apparatuses. The separation membranes vary in view of the pore size and the separation function thereof, such as microfiltration membranes, ultrafiltration membranes, nanofiltration membranes, reverse osmosis membranes, forward osmosis membranes, etc. These membranes are used, for example, for refining production of drinking water from seawater, brine water, water containing harmful materials, etc., or for production of industrial ultrapure water, drainage water treatment, recovery of valuable materials, etc. The membranes are selectively used according to target components to be separated and separation performance.

Furthermore, membrane separation bio-reactor (MBR) is a treatment method in which a separation membrane is immersed in a bio-reactor tank, and activated sludge and treatment water are separated by the membrane. The MBR is space-saving, and provides good water quality, and therefore is being introduced domestically into small-scale facilities, and overseas, where new establishment is frequent, into large-scale facilities that exceed 100 thousand m³/day.

The Patent Documents WO 2008/117783 A1, JP 2000117067 A and JP 2011519716 (WO 2009127345) propose separation membrane elements having various constructions.

US 7,892,430 B2 mentions a membrane module equipped with a plurality of membrane elements that are bags formed from flat membranes. The plurality of membrane elements are aligned in a rectangular parallelepiped-shaped frame so as to be parallel with each other, by rings attached to the membrane elements. The frame is fixed to a wall of a sedimentation tank, or the like. Each membrane element is provided with, as an outflow hole for permeate liquid, a hole that extends through the separation membrane and the flow path member. Mutually adjacent membrane elements are interlinked by a tubular joint member that connects to each outflow hole.

JP 3 574 539 B2 discloses an immersion type membrane separation module used for water purification of sewage water, domestic effluent, and factory effluent, further involving activated-sludge-treatment methods comprising microbiol degradation processing with an aerator. The disclosed membrane separation module comprises separation membrane elements formed from flat film elements in the shape of flat membrane sheet envelopes from the inside of which the permeate is led to filtrate drawing pipes. Each separation membrane element thereof is suspended by a rigid frame out of four peripheral frame bodies.

US 2005/023207 A1 relates to a filtration system provided with filter media operable to remove solids, particulate and colloidal matter from a process fluid. The filtration system may include one or more porous membranes which are anchored or secured on their periphery with a large open work area operable to remove selected components from the process fluid. The filter media may include an envelope formed from two membrane sheets with a spacer element disposed there between. A chamber or collection zone may be formed within the envelope to receive clarified fluid separated from the process fluid. Alternatively, the filter media may be multiple layers of spiral wound membranes or a roll of membranes.

JP H07 31857 A discloses a plane membrane structure suitable to prevent a membrane from being broken by the weight of transmitted liquid deposited in the membrane when a membrane element is lifted from a raw liquid tank or due to the pressure of backwashing. In JPH07 31857 two membrane sheets form a membrane bag and are separated by a spacer net and bonded to the spacer net in interrupted parallel lines or a dotted pattern by a resin.

### Summary of the invention

### Problems to be solved by the invention

In the membrane module disclosed in the Patent Document 4, mutually adjacent membrane elements are interlinked by a joint member as mentioned above. That is, in this document, a continuous flow path for permeate liquid extends through the plurality of membrane elements and fixes the individual membrane elements. In a state in which elements are interlinked in this manner, it is difficult to extract only one or more elements. Hence, even in the case where one or more of the plurality of membrane elements are broken, it is necessary to replace all the connected membrane elements (that is, one membrane module).

A task to be solved by the invention is to provide an element unit and a separation membrane module made up of such element units which, at the time of failure occurring on one or more of the membrane elements constituting the separation membrane module, facilitate the maintenance thereof, that is, the replacement or extraction of the one or more failed membrane elements.

### Means of solving the problems

The invention provides for an element unit as defined in claim 1. Beneficial embodiments are set out in the dependent claims.

The invention also provides a separation membrane module as set out in claim 5 comprising the element unit of claim 1.

The invention also provides a method for attaching and detaching the separation membrane element comprising providing the separation membrane module of claim 5.

### Effect of the invention

In the element unit of the invention, the separation membrane elements are suspended on the shaft, and the water collection nozzle provided in each separation membrane element provides communication between the water collection flow path of the separation membrane element and the outside of the separation membrane elements. That is, the separation membrane elements are independent of each other. Hence, it is possible to easily take out one or more of the separation membrane elements.

### Brief description of the drawings

[Fig. 1] Figs. 1(a) and 1(b) are sectional views schematically showing an example of an embodiment of a separation membrane element that constitutes the element unit of the invention, Fig. 1(a) being a view of a section taken in parallel with a membrane surface at the center in thickness, and Fig. 1(b) being a view of a section taken in a thickness direction.
[Fig. 2] Fig. 2 is a sectional view corresponding to Fig. 1(a) and showing an example of another embodiment of a separation membrane element that constitutes the element unit of the invention.
[Fig. 3] Figs. 3(a) and 3(b) are general diagrams showing an example of an embodiment of a water collection nozzle for use in the invention, Fig. 3(a) being a plan view and Fig. 3(b) being a front view.
[Fig. 4] Figs. 4(a) and 4(b) are general diagram showing an example of still another embodiment of the separation membrane element that constitutes the element unit of the invention, and Fig. 4(c) is a general diagram in which an embodiment of the element unit in which separation membrane elements presented in Figs. 4(a) and 4(b) are alternately arranged is viewed from above.
[Figs. 5] Fig. 5(a) is a general diagram showing an example of a further embodiment of the separation membrane element that constitutes the element unit of the invention, and Fig. 5(b) is a general diagram showing an example of an embodiment of the element unit in which the separation membrane unit shown in Fig. 5(a) is used.
[Fig. 6] Fig. 6 is a sectional view showing another example of an embodiment of the separation membrane element that constitutes the element unit of the invention.
[Fig. 7] Figs. 7(a) and 7(b) are sectional views showing another example of the embodiment of an end portion of a separation membrane element that constitutes the element unit of the invention.
[Fig. 8] Figs. 8(a) and 8(b) are schematic sectional views each showing, under magnification, partially another example of an embodiment of a fixed portion fixed by a shaft that constitutes the element unit of the invention.
[Fig. 9] Fig. 9 is a perspective view showing an example of an embodiment of separation membrane module of the invention.
[Figs. 10] Fig. 10(a) is a perspective view schematically showing an example of an embodiment of the element unit of the invention, and Fig. 10(b) is a perspective view in which an example of shafts that constitute the element unit is viewed from a different direction.
[Fig. 11] Fig. 11(a) is a front view of the separation membrane module shown in Fig. 9, and Fig. 11(b) is a side view thereof.
[Fig. 12] Figs. 12(a) and 12(b) are front views showing an example of an embodiment of the separation membrane module unit of the invention, Fig. 12(a) showing a unit in which two separation membrane modules are conjoined, and Fig. 12(b) showing a unit in which three separation membrane modules are conjoined.
[Fig. 13] Fig. 13 is a perspective view showing another example of an embodiment of the separation membrane module of the invention.
[Fig. 14] Fig. 14 is a perspective view showing an example of an embodiment of the element unit of the invention.
[Fig. 15] Fig. 15 is a perspective view showing, under magnification, partially an example of a casing groove guide portion that constitutes the separation membrane module of the invention.
[Fig. 16] Fig. 16 is a perspective view showing another example of an embodiment of the separation membrane module of the invention.

### Description of embodiments

### [SEPARATION MEMBRANE ELEMENT]

In the invention, the element unit has a plurality of separation membrane elements. The separation membrane elements are elements having a flat membrane structure. When separation membranes are stuck together so that the permeate-side surfaces thereof face each other, a portion of a peripheral edge portion of the membranes is provided with a water collection portion, and the peripheral edge portion thereof except the water collection portion is sealed. There is provided a structure in which a resin portion is disposed in a permeate-side surface region of each separation membrane which is on an inward side that is more inward than the sealed peripheral edge portion, and this resin portion is used to bond portions of the separation membranes on both sides together.

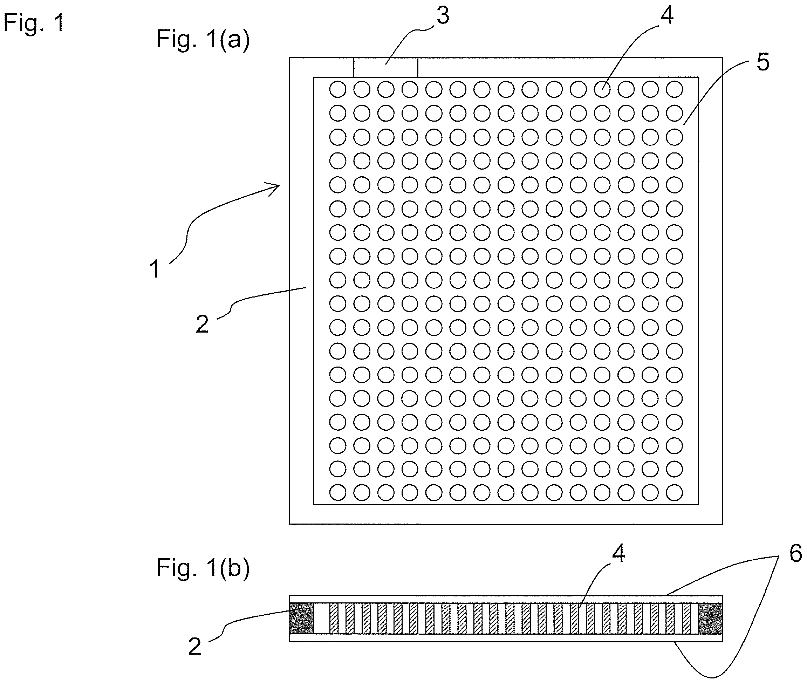

Figs. 1(a) and 1(b) are sectional views exemplifying an embodiment of the separation membrane element. Fig. 1(a) shows a section of the separation membrane element in a plan view obtained by sectioning the separation membrane element parallelly with the membrane surface, at a thickness center of a separation membrane complex, and Fig. 1(b) schematically illustrates a section thereof along the thickness direction.

In Figs. 1(a) and 1(b), a separation membrane element 1 has a sealed portion 2, a water collection portion 3, dot-shaped resin portions 4, water collection flow paths 5, and separation membranes 6. The separation membrane element 1 is constructed of a separation membrane pair made up of the two separation membranes 6, 6. The separation membranes 6, 6 are disposed so that permeate-side surfaces of the separation membranes 6, 6 face each other and are apart from each other by a predetermined space. A perimeter (peripheral edge portion) of this space is sealed to form the sealed portion 2. Portions of the separation membranes 6, 6 which are on an inward side that is more inward than the peripheral edge portion are partially connected by the resin portions 4.

That is, as for the two separation membranes 6, 6, portions of the membrane surfaces thereof are bonded together by the resin portions 4 so that the predetermined space is secured. The predetermined space formed between the separation membranes 6, 6 form flow paths through which water having permeated through the membrane passes, that is, the water collection flow paths 5. The water having passed through the water collection flow paths 5 are collected in the water collection portion 3, from which water is taken out to the outside of the separation membrane element 1. By disposing the water collection portion 3 in the peripheral edge portion, the area of the separation membranes that have a filtration function is kept from being lost.

The perimeter (peripheral edge portion) of the separation membrane element 1 is sealed by a method, such as an adhesive resin, thermal welding, ultrasonic welding, etc., so as to form the sealed portion 2. The water collection portion 3 is provided in a portion of the membrane peripheral edge portion, and the water collection portion 3 is not sealed.

Herein, the sealing of the peripheral edge portion means preventing supplied water (water to be treated) outside the separation membrane element from flowing directly from the peripheral edge portion into an interior of the separation membrane element (that is, preventing supplied water from flowing thereinto via any route other than permeation through the separation membranes) by performing adhesion, pressure bonding, welding, fusion, folding, etc. At the same time, the sealing means preventing the permeate water that has permeated through the separation membrane from leaking to the outside of the separation membrane element via anywhere except the water collection portion 3.

Incidentally, the separation membranes 6 that form a pair may be two independent separation membranes whose mutually facing edge portions are sealed together, or may also be one folded separation membrane whose mutually facing edge portions are sealed together.

The construction in which the resin portions 4 bond portions of the separation membrane on both sides together refers to a construction in which, in a separation membrane pair, the resin portions 4 are bonded to both the permeate-side surface of one separation membrane 6 and the permeate-side surface of the other separation membrane 6 that faces the one separation membrane 6. That is, in the separation membrane pair, one separation membrane is fixed to the other separation membrane via the resin portions.

Furthermore, the "inward side" refers to a surface in the permeate-side surface of a separation membrane 6 which does not include the peripheral edge. Particularly, in the case where the separation membranes form a bag-shaped membrane, a portion surrounded by the sealed portion corresponds to an "inward side". The separation membranes 6 are not limited as long as the membranes separate a component in a fluid supplied to a separation membrane surface, and provides a permeate fluid that has permeated through the separation membrane. The separation membrane may be equipped with, for example, a separation function layer, a porous support layer, and a base material.

When the permeate-side surface of each separation membrane 6 is constructed of the base material, the base material may be impregnated with a component of resin of the resin portions 4. If resin is disposed on the base material on the permeate side of the separation membrane and heating is performed from a separation function layer surface of the separation membrane, the impregnation thereof with the resin progresses from the permeate side of the separation membrane toward the function layer surface thereof. As the impregnation progresses in this manner, the adhesion between the resin and the base material becomes strong. Therefore, when the produced separation membrane element 1 is washed, the washing thereof from the permeate side with a chemical solution will unlikely cause the pair of separation membranes to peel off from each other.

In the separation membrane element 1, the flow resistance of the permeate water having permeated through the separation membranes 6 can be lessened by securing a predetermined space on the permeate sides of the separation membranes 6. Usually, if the permeate sides of the separation membranes 6 in a separation membrane element are not provided with a member such as a spacer or the like, the permeate sides of the separation membranes closely contact each other, so that the flow resistance of the permeate water becomes large, resulting in a reduction in the flow amount of permeate water. In the separation membrane element 1, a space is secured between the separation membranes, without disposing a member, such as a spacer or the like, so as to lessen the flow resistance of permeate water.

The permeate-side space between the separation membranes 6, 6 is in the range from 500 µm or greater to 5000 µm or less. The space between the separation membranes being 5000 µm or less reduces the impact of air bubbles striking the membrane surfaces at the time of aeration operation during water treatment operation, and therefore restrains breakage of the membranes. Furthermore, the space between the separation membranes being 50 µm or greater (50 µm not being according to the invention) secures a large space between the permeate-side membrane surfaces facing each other, and therefore reduces the flow resistance of permeate water, resulting in an increase in the flow amount of permeate water. The space between the separation membranes is more preferred to be in the range from 500 µm or greater to 3000 µm or less.

Incidentally, flow paths can be secured by sandwiching a flow path member, such as a net, between permeate-side inward-side portions. However, since the separation membranes are not fixed to the flow path member, there is a fear that in the washing of the membranes from the permeate sides with a chemical solution, pressure exerted on the separation membranes from the permeate sides may swell the bag formed by the separation membranes and may break the separation membranes 6. By interposing and bonding the resin portions 4 between the separation membranes 6, 6, such breakage can be prevented, so that the washing of the permeate sides of the membranes also becomes possible.

As for the proportion of the area of the resin portions to the area of the separation membranes 6, if the proportion is small, there is a fear that the washing from the permeate sides with a chemical solution may peel the separation membranes off, and if the proportion is large, the resin will hamper the flow path, so that the flow amount of permeate water declines. Therefore, the area proportion of the resin portions on the inward side is preferred to be in the range from 1% or greater to 70% or less. More preferably, the area proportion is in the range from 10% or greater to 50% or less.

The shape of the resin portions 4 is in a dot shape, a linear shape or a grid shape, wherein a projected image of the resin portion on the separation membranes is discontinuous. Other forms not according to the inventions are shapes such as a circular shape, a polygonal shape or an irregular shape, or a line shape of a straight line, a curved line, a wavy line, zigzags or the like, and, furthermore, a lattice shape, as a shape projected a separation membrane. Furthermore, the arrangement of dot-shaped resin portions may be a lattice point shape, a houndstooth shape, etc., and is not particularly limited. By adjusting the shape and arrangement of the inward-side resin portions, the separation membrane element can be designed so as to satisfy required conditions for separation characteristic and permeation performance. The projected image of the resin portions on the separation membranes 6 is discontinuous. That is, that two or more resin portions be arranged, with a space left therebetween, on a separation membrane in a planar direction of the separation membrane. More concretely, it is preferable that one or more, or five or more, or ten or more resin portions be provided per 5 cm square in the inward-side portion of the permeate-side surface of a separation membrane 6. Furthermore, it is preferable that 100 or less, 50 or less, or 30 or less resin portions be provided per 5 cm square.

A component that constitutes the sealed portion 2 and the resin portions 4 on the inward side, although not particularly limited, are preferred, in view of chemical resistance, to be polyolefin or copolymer polyolefin, such as ethylene vinyl acetate copolymer resin, polyethylene or polypropylene, etc.; furthermore, polymers, such as urethane resin or epoxy resin, can also be selected. However, if the component is a thermoplastic polymer, which is easy to form, it is possible to make a uniform shape of the resin portions. If the component is a thermoplastic polymer with a high melting point, there is a fear that when the resin is bonded to the separation membranes, the separation function layers may be melted. If the melt temperature is excessively low, there is a fear that the inward-side portions of the separation membranes may peel off during operation. Hence, the resin is preferred to be a thermoplastic polymer whose melting point is in the range of 80°C to 200°C.

Although the method of bonding the sealed portion 2 and the resin portions 4 to the separation membranes 6 is not particularly limited, the shape of the resin can be freely adjusted so that the required conditions regarding separation characteristic and permeation performance can be satisfied, by changing the treatment temperature and the kind of resin selected.

Incidentally, to the sealed portion 2 and the resin portions 4, the same resin may be applied, or different resins may be applied. Furthermore, as for the sealed portion 2, the separation membranes may also be directly welded together without employing resin.

Incidentally, causing the adhesive to achieve the effect of adhesion core material and giving the separation membranes 6 appropriate softness and rigidity by bonding the separation membrane 6 by the foregoing method is also an important point in the invention. Therefore, it is necessary, depending on circumstances, to select the intervals of the resin portions and the shape and material thereof as well as the state of adhesion from the viewpoint of softness and rigidity of the separation membranes 6.

In the invention, the separation membranes are flat membrane-shaped separation membranes, and are preferably separation membranes in which a separation function layer is formed on a non-woven fabric-based base material.

As for the thickness of the separation function layers of the separation membranes, if the thickness is excessively thin, defects, such as cracks, may sometimes occur resulting in a decline in the filtration performance, and if the thickness is excessively thick, the permeate water amount may decline; therefore, the thickness is usually preferred to be selected from the range of 0.001 to 0.5 mm (1 µm to 500 µm) and, preferably, of 0.05 to 0.2 mm (50 µm to 200 µm).

As the separation function layers, crosslinked macromolecules are preferably used in view of pore size control and durability. In view of the separation performance regarding components, membranes in which a separation function layer formed by polycondensing multifunctional amine and multifunctional acid halide on a porous support layer, an organic/inorganic hybrid function layer, etc. are layered can be suitably used. Furthermore, a membrane that includes a porous support layer and has both a separation function and a supporter function, such as a cellulose membrane, a polyvinylidene fluoride membrane, a polyether sulfone membrane or a polysulfone membrane, can also be employed. That is, the separation function layer and the porous support layer may be realized by a single layer.

As for the separation membrane in the invention, it is appropriate to use a separation membrane that is made up of, preferably, a base material and a separation function layer, and particularly a separation membrane in which a separation function layer made of a polyvinylidene fluoride-based resin is formed. Herein, it is preferable that between the base material and the separation function layer there intervene a layer in which the base material and a resin that constitutes the separation function layer coexist. The polyvinylidene fluoride-based blend resin moves from the base material surface into an interior thereof, achieving a so-called anchor effect, whereby the separation function layer is firmly fixed to the base material, so that the separation function layer is prevented from peeling off from the base material. As for the separation function layer, it is no problem if the layer exists only on one side surface of the base material, or it is no problem if the layer exists on each of the two side surfaces thereof. It is no problem if the separation function layer has a symmetrical structure to the base material or an asymmetrical structure thereto. Furthermore, in the case where the separation function layer exists on each of the two side surfaces of the base material, it is no problem if the separation function layers on the two sides are continuous via the base material, or it is no problem if the separation function layers on the two sides are discontinuous via the base material.

In the separation membrane formed of the separation function layer and the base material, the base material has a function of supporting the separation function layer and giving strength to the separation membrane. The material that constitutes the base material may be an organic base material, an inorganic base material, etc., and is not particularly limited; however, the material is preferred to be an organic base material in view of the ease in weight reduction. As the organic base material, there can be cited woven or knitted fabrics or non-woven fabrics made of an organic fiber, such as cellulose fiber, cellulose triacetate fiber, polyester fiber, polypropylene fiber or polyethylene fiber. Among others, a non-woven fabric whose density is relatively easy to control is particularly preferable.

As the separation membrane 6, any one of a reverse osmosis membrane, a nanofiltration membrane, an ultrafiltration membrane and a microfiltration membrane can be applied. Furthermore, it suffices that appropriate one or more kinds of membranes are selected and combined according to the size of separation-object substance; however, for use for sewage or waste water treatment, an ultrafiltration membrane and a microfiltration membrane are particularly preferable.

Incidentally, water having permeated through the separation membranes 6 passes through the water collection flow paths 5, and is collected in the water collection portion 3, and is taken out of the system of the separation membrane element via a water collection nozzle 7 attached to the water collection portion 3. In order to easily and certainly take out permeate water from the water collection portion, it is preferable to dispose a hollow water collection nozzle in the water collection portion.

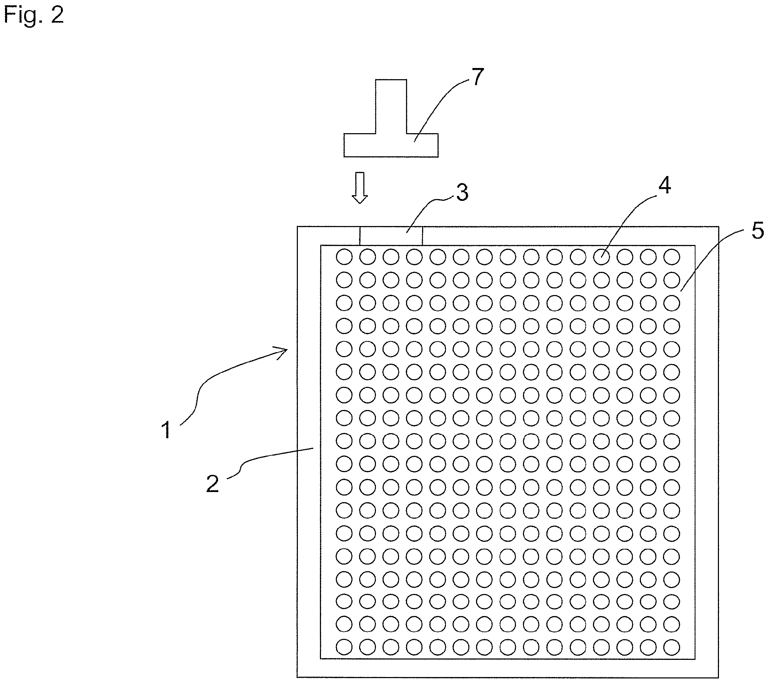

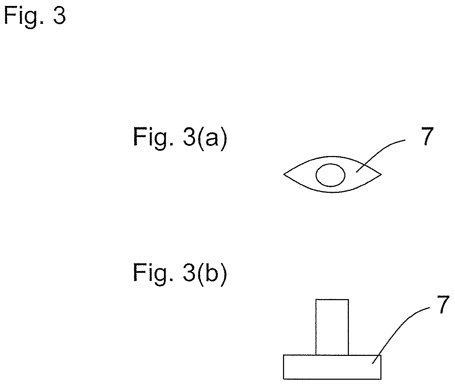

Fig. 2 shows the separation membrane element 1 and the water collection nozzle 7 side by side. Furthermore, Fig. 3 shows a plan view (a) and a front view (b) of the water collection nozzle 7.

As shown in Fig. 2, a portion of the sealed portion 2 at the membrane peripheral edge is provided with the water collection portion 3, and the water collection nozzle 7 is disposed at the water collection portion 3. As stated above, the water collection portion 3 is not sealed beforehand, and is sealed after the water collection nozzle 7 is attached. The water collection nozzle 7 provides communication between the water collection flow paths 5 and the outside of the separation membrane element 1. It suffices that the width needed for installation of the water collection nozzle 7 or the like is determined by comprehensively judging from the size of the water collection nozzle 7 to be attached, the size of the separation membrane element 1, etc.; however, the diameter of a tubular portion of the water collection nozzle 7 is usually about 0.3 cm to 3 cm. As long as the purpose of taking out permeate water from the separation membrane element 1 is achieved, the structure, material, etc. of the water collection nozzle 7 is not particularly limited; for example, a tube made of resin may be employed.

Figs. 3(a) and 3(b) show an example of an embodiment of the water collection nozzle used in the invention. The water collection nozzle 7 is constructed of upper and lower hollow members. As for the lower portion of the water collection nozzle 7, two sheets of curved surface are disposed so as to form a hollow, whose lower potion is open and whose upper portion is closed by a generally flat surface. A generally central portion of the upper flat surface has an opening, to which a tubular portion (upper hollow member) whose sectional shape is circular or elliptical is connected. Due to the provision of the water collection nozzle 7 with a shape as shown in Fig. 3, it is possible to seal the water collection nozzle 7 and the sealed portions 2 without forming wrinkles in connection with attachment of the water collection nozzle 7 to the water collection portion 3 of the separation membrane element 1. As the method for sealing, a method by thermal welding, a method that uses an adhesive, etc. can be conceived. However, the sealing method is not particularly limited. To further ensure the sealing, a method that uses both thermal welding and an adhesive can also be conceived. The shape of the attaching portion is not particularly limited, but it suffices that an appropriate shape thereof is selected according to the size of the separation membrane element 1 and the size and shape of the water collection nozzle 7, etc.

Next, an embodiment of an element unit obtained by bundling a plurality of separation membrane elements 1 into a module will be described. In the invention, the separation membrane element is an element in which a support plate is eliminated, so that the thickness of the entire element can be reduced. Therefore, it is possible to increase the membrane area per installation area as an element unit (filling factor of separation membranes). However, each separation membrane element 1 is provided with the water collection nozzle 7 attached. Therefore, an issue is how to dispose the water collection nozzle, rather than the membrane portion, in order to increase the filling factor of the separation membrane elements 1. Accordingly, the element unit of the invention is characterized by being arranged so that the water collection nozzles of mutually adjacent separation membrane elements do not interfere.

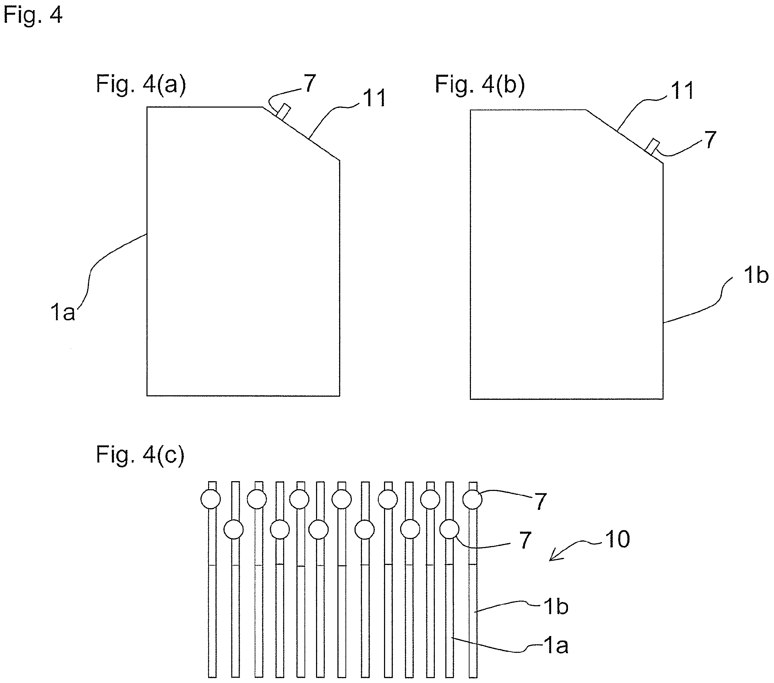

Figs. 4(a) and 4(b) show two separation membrane elements 1a, 1b. The two elements differ in the attachment position of the water collection nozzle 7. That is, the position of the water collection nozzle 7 of the separation membrane element 1a in (a) and the position of the water collection nozzle 7 of the separation membrane element 1b in (b) are different. By making the installation positions of the water collection nozzles in an alternating pattern, interference between the water collection nozzles of adjacent separation membrane elements can be avoided and therefore the separation membrane elements can be disposed at reduced intervals at the time of assembly in a thermoplastic polymer. An embodiment of an element unit in which a plurality of separation membrane elements 1a and 1b are alternately arranged is shown in a view from above in Fig. 4(c). Incidentally, Figs. 4(a) to 4(c) show an example, and the structure shown therein provides no restriction as long as the water collection nozzles 7 can be disposed without interference.

The separation membrane elements 1a and 1b illustrated in Figs. 4(a), 4(b) are an example in which the elements have been made in a shape that has an oblique side 11 by removing one corner of a rectangular flat membrane-shaped separation membrane, and a water collection portion and a water collection nozzle 7 are disposed at the oblique side. Although this disposal is not an exclusive one, the disposal has an advantage in manufacture that providing the oblique side 11 and disposing a water collection nozzle 7 on the oblique side 11 as described above makes it easy to define the position of an attaching site for the water collection nozzle, and also has an advantage that in the case where a water collection pipe is installed at a side of the membrane element and where the water collection pipe and the water collection nozzle are connected by a tube or the like, excessive force is kept from acting on the water collection nozzle, and adhesion of the water collection nozzle is prevented from peeling off or breaking.

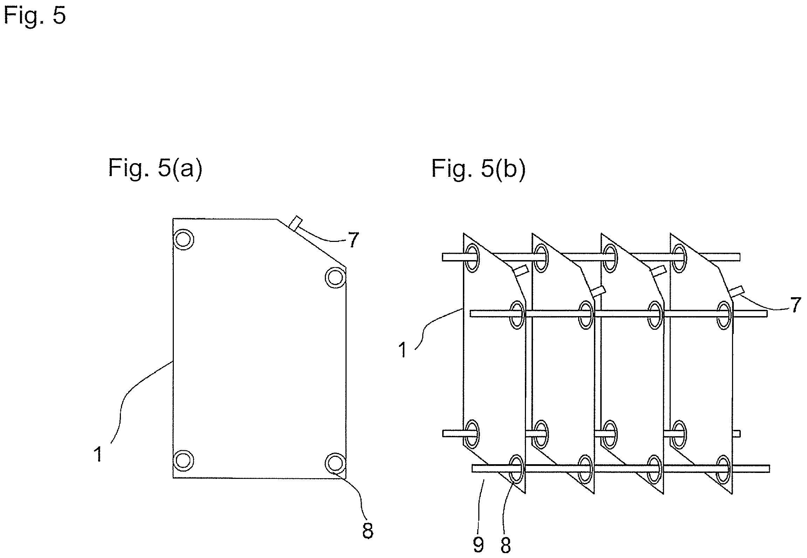

Fig. 5(a) shows an example of an embodiment of a separation membrane element according to the foregoing embodiment. Fig. 5(b) shows an example of an embodiment of an element unit.

In Fig. 5(a), through-holes 8 are disposed at four locations near end portions (corner portions) of each separation membrane element 1. As for the number of through-holes, it suffices that an appropriate number of through-holes are opened according to the size of the element or the like. In the case where the separation membrane is generally quadrangular, it is preferable to provide through-holes in the four corners at outward sides in planar directions of the separation membrane. If the through-holes are formed by, for example, fixing grommets, the peripheries of the through-holes are reinforced, which is preferable in view of durability. As for the separation membrane elements having through-holes, as shown in Fig. 5(b), a plurality of separation membrane elements can be arranged and put together so that the water collection nozzles 7 thereof do not overlap with each other, and can be formed into an element unit by inserting, for example, shafts 9 through the adjacent through-holes 8. By adopting such a structure, it becomes possible to considerably reduce the number of members that constitute the element unit. Besides, the separation membrane element, the element unit and the separation membrane module are provided with an appropriate rigidity and a softness that allows energy of aeration to escape, so that when used in an MBR, the separation membrane element, the element unit and the separation membrane module have excellent durability against aeration or the like from below.

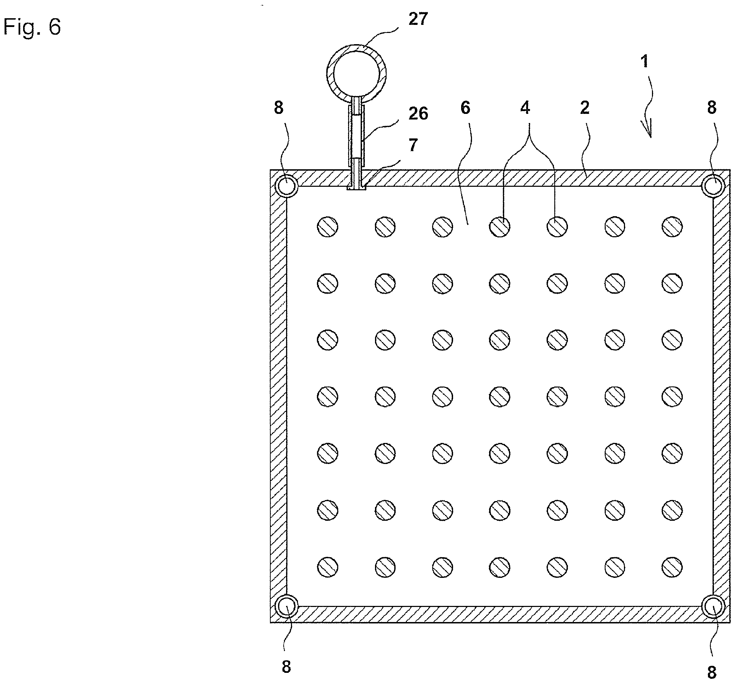

Fig. 6 is a sectional view of an example of another embodiment of a separation membrane element that constitutes the element unit of the invention, which is taken on a plane through a center of the separation membrane element in a thickness direction thereof. Furthermore, the drawing illustrates a water collection pipe 27 and a tube 26 together with the separation membrane element 1.

The water collection pipe 27 is connected to a water collection nozzle 7 via the tube 26. A suction pump (not shown) is connected to a downstream side of the water collection pipe 27, and applies negative pressure to an interior of the separation membrane element 1 to take out permeate water.

In Fig. 6, the separation membrane element 1 is constructed mainly of a separation membrane pair in which two flat membrane-shaped separation membranes 6 are disposed so that permeate-side surfaces thereof face each other, and has a bag-shaped structure in which a peripheral edge portion of the separation membrane pair is sealed. The separation membrane element 1 has suspension portions represented by through-holes 8 in end portions at outward sides in planar directions of the separation membrane. An edge portion of each through-hole 8 is sealed so as to shut the outside and the inside of the separation membrane element off from each other.

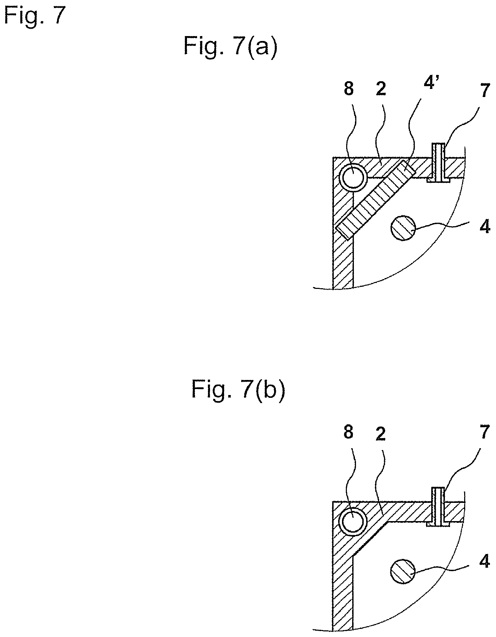

Alternatively, as shown in Fig. 7(a), each through-hole 8 may be constructed so as to be surrounded by a sealed portion 2 and/or a resin portion 4'. Furthermore, as shown in Fig. 7(b), the cross sectional area of each end portion of the sealed portion 2 may be increased, and a through-hole 8 may be formed inside the end portion.

Due to sealing the edge portion of each through-hole 8 in this manner, it does not happen that water to be treated outside the separation membrane element leaks into the inside thereof through a through-hole 8, nor that permeate water inside the separation membrane element leaks to the outside. Furthermore, as for the number of through-holes 8, although four through-holes are provided in Fig. 6, the number thereof is not limited to this example, but can be set as appropriate according to the size and shape of the element, etc. The positions of the through-holes 8 are also not particularly limited. Each through-hole 8 is preferred, in view of durability, to be reinforced at a hole perimeter by, for example, fixing thereto a fastening clasp such as a grommet. As the material of the fastening metal pieces, an arbitrary material can be used, including stainless steel, aluminum, polycarbonate resin, ABS resin, etc.

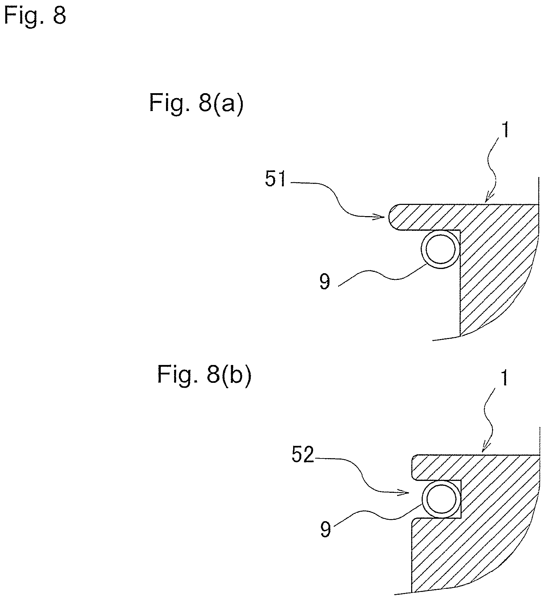

Incidentally, the structure of the suspension portions that suspend the separation membrane element 1 on the shafts 9 is not particularly limited to through-holes, but it is no problem if the structure is an upper support structure (Fig. 8(a)) or a cutout structure (Fig. 8(b)) as shown in Figs. 8. The upper support structure of the suspension portions shown in Fig. 8(a) is a structure in which a protruded portion 51 is formed on an upper portion of each of left and right ends of the separation membrane element 1 and the separation membrane element 1 is fixed so that each protruded portion 51 is supported on an upper side of a corresponding one of the shafts 9. Furthermore, the cutout structure of the suspension portions shown in Fig. 8(b) is a structure in which each of left and right ends of the separation membrane element 1 is provided with a cutout portion 52 that accommodates a corresponding one of the shafts 9, and the shafts 9 are inserted through the cutout portions 52. The shapes, portions and numbers of the protruded portions 51 and the cutout portions 52 can be determined as appropriate.

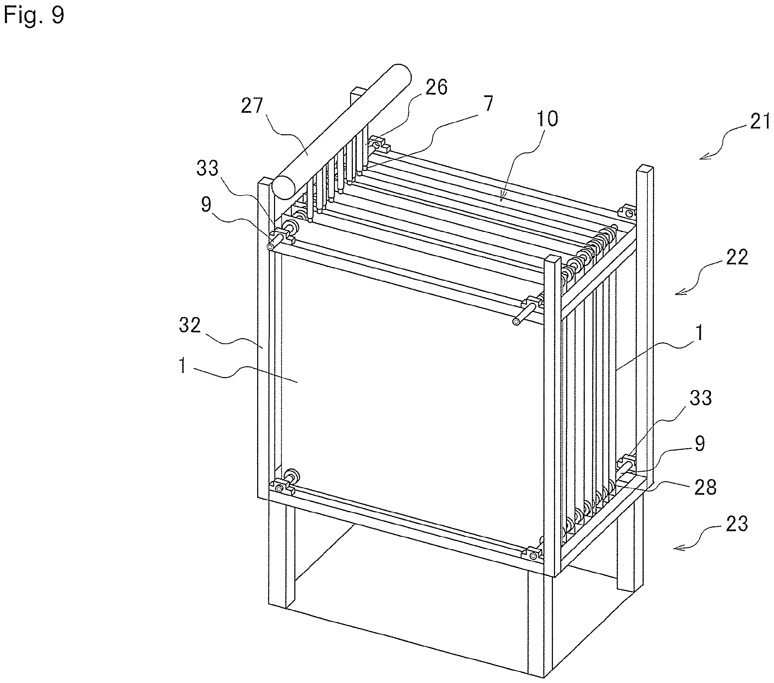

Fig. 9 is a perspective view showing an example of an embodiment of the separation membrane module of the invention.

In Fig. 9, a separation membrane module 21 is constructed of an element block 22, an aeration block 23, and a water collection pipe 27. The element block 22 houses an element unit 10 described above in an inward side of a casing 32. The element unit 10 is constructed by placing in parallel a plurality of separation membrane elements 1, with shafts 9 inserted through the through-holes 8 of the separation membrane elements 1. The aeration block 23 is disposed below the element block 22. The aeration block 23 is made up of an air diffuser device (not shown) that is linked to a blower (not shown). Air is jetted toward the element block 22 of the separation membrane module 21 sunk in water to be treated within a bio-reactor tank, from the aeration block 23 provided below.

Between the adjacent separation membrane elements 1, clearance holder members 28 are provided in order to secure flow paths of water to be treated and air. Although the clearance holder members 28 are not particularly limited, washers or collars made of polyurethane, washers or collars made of rubber represented by nitrile rubber and silicon rubber, etc. are suitably used from the viewpoint of durability and impact absorbing characteristic. Due to disposing the clearance holder members 28 described above, the separation membrane elements and the separation membrane module are provided with an appropriate rigidity and also a softness that allows energy of aeration to escape, exhibiting excellent durability against aeration from the aeration block 23 provided below.

Furthermore, the shafts 9 inserted through the through-holes 8 in end portions (four corners in the example shown in Fig. 9) of the separation membrane elements 1 are connected and fixed to the casing 32 by shaft holder portions 33. There is provided a structure in which, by releasing fixing portions of the shaft holder portions 33, the shafts 9 can be slid in directions substantially parallel to the entire length of the separation membrane module (directions perpendicular to the flat membranes of the membrane elements).

For the connection of the shafts 9 and the casing 32, the shaft holder portions 33 are installed on the casing 32, and the shafts 9 are inserted within the shaft holder portions 33. Furthermore, the shafts 9 can be slid by operating a stopper screw mechanism of the shaft holder portions 33. However, the connection of the shafts 9 and the casing 32 is not particularly limited to the foregoing construction, but it is no problem that the type and method of the connection are arbitrary; for example, the frame of the casing 32 may be provided with holes for insertion of the shafts, and C-shaped or E-shaped stopper rings may be used. The material of the casing frame and the shaft holder portions can be arbitrarily selected from various kinds of metals, such as stainless steel and aluminum, various kinds of thermoplastic resins, such as PVC resin and ABS resin, various kinds of thermosetting resins, such as polyurethane resin and epoxy resin, etc.; however, stainless steel, which is high in corrosion resistance and rigidity, is suitably used.

In the case of the element block construction described above, for example, even when failed membrane elements whose separation membranes have broken and whose filtration function has been lost occur at two ends, the failed membrane elements can easily and conveniently be extracted by sliding the shafts 9. The spaces formed after the extraction are allowed to be reloaded with new or repaired membrane elements; alternatively, spacers represented by shims, washers, etc. can be loaded. That is, it becomes possible to easily and conveniently perform replacement and maintenance of a failed membrane element without a need to disassemble the whole element block.

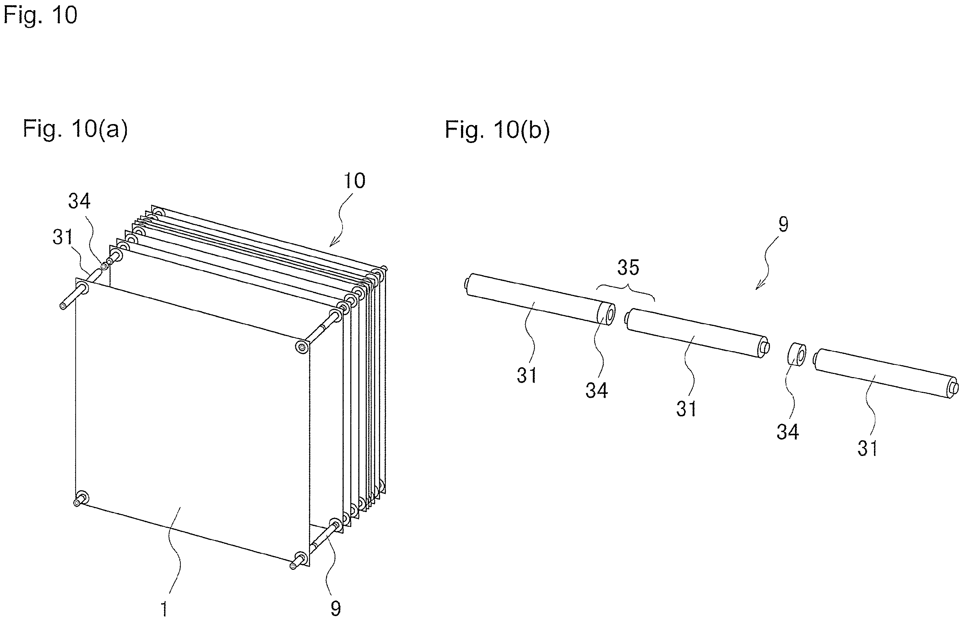

Next, a preferred construction of a shaft that constitutes the invention will be described. It is desirable that each shaft 9 be constructed by joining unit shafts 31. In a linking method for unit shafts 31, shaft joints 34 that connect adjacent unit shafts 31 to each other can be used. For example, as shown in Fig. 10(b), a method in which unit shafts 31 whose end portions are provided with steps are conjoined by shaft joints 34 represented by set collars is easy and convenient, and can be suitably used. Furthermore, it is preferable that an outside diameter of the unit shafts 31 and an outside diameter of the set collar be substantially the same. As shown in Fig. 10(a), linked shafts 9 can be inserted through the through-holes of separation membrane elements 1, and can be smoothly slid. However, as for the linking method for adjacent unit shafts, methods other than that mentioned above can be arbitrarily selected, including a key set type method, a pin stop type method, etc.

The material of the shafts 9 and the unit shafts 31 can be arbitrarily selected from various kinds of metals, such as stainless steel and aluminum, various kinds of thermoplastic resins, such as PVC resin and ABS resin, various kinds of thermosetting resins, such as polyurethane resin and epoxy resin, etc.; however, stainless steel, which is high in corrosion resistance and rigidity, is suitably used. Furthermore, as long as the linking function can be realized, either one of a solid shaft and a hollow shaft may be used, and the shaft form is not limited to a round shape, and it is no problem the shaft has an arbitrary shape, such as an elliptical shape or a generally quadrangular shape.

Furthermore, the unit shafts are not limited to rigid rods, such as shafts or pipes, but it is no problem if the unit shafts are flexible rods, such as wires or strings, as long as a structure that allows the membrane elements can be suspended is provided. In this case, it is desirable that each end portion of each flexible rod be provided with a joint portion so that flexible rods can be interlinked.

In the case of the element block constructed by using shafts 9 obtained by linking the unit shafts 31, for example, even when a failed membrane element whose separation membrane has broken and whose filtration function has been lost occurs in a portion of the element block, the failed membrane element can easily and conveniently be extracted by releasing the fixing portions of the shaft holder portions 33, sliding a linking portion 35 of each shaft 9 to the vicinity of the failed element and separating shaft joint 34 and the unit shaft 31 of the linking portion 35 from each other. The space formed after the extraction is allowed to be reloaded with a new or repaired membrane element; alternatively, a spacer represented by a shim, a washer, etc. can be loaded, similarly to the foregoing case. That is, it becomes possible to easily and conveniently perform maintenance of an arbitrary membrane element without a need to disassemble the whole element block.

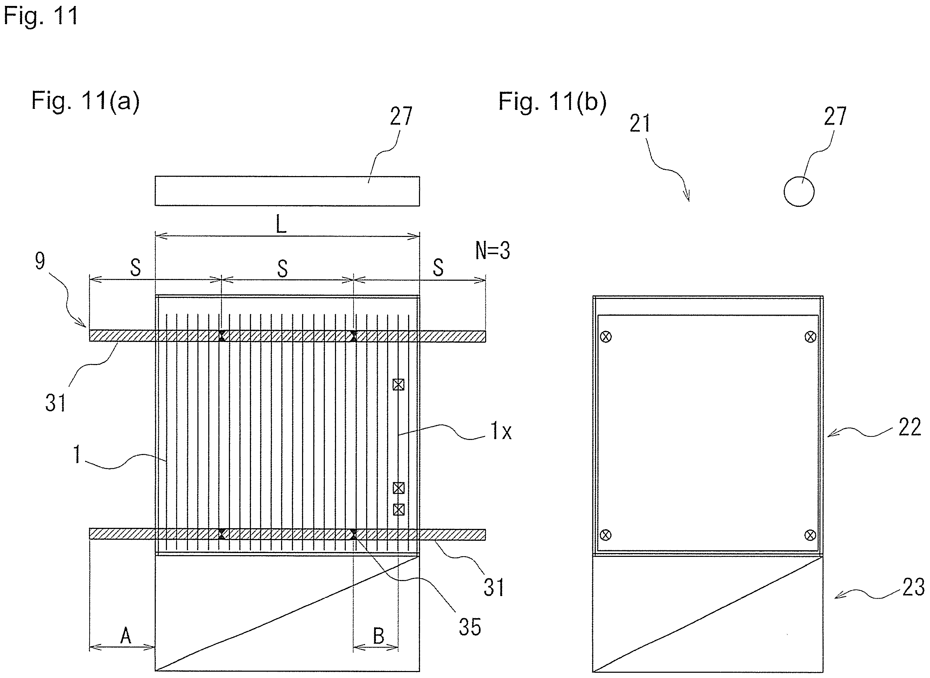

Furthermore, the length and number of unit shafts 31 will be described through the use of Fig. 11. In order to satisfy the foregoing maintenance function, it is preferable that, where the length of the unit shafts 31 is S, the number of unit shafts related to one separation membrane module is N, and the entire length of the separation membrane module is L, the relation among them be defined as S ≥ L/(N - 1). The lengths S of the plurality of unit shafts 31 may be equal to or different from each other as long as the foregoing expression is satisfied. For example, in Fig. 11, in the case where the module's entire length L is 100 cm and the number N of unit shafts is 3, the unit shaft's length S needs to be at least 50 cm. This means that the slide margin A of the shafts 9 relative to the separation membrane module's entire length L (the amount of slide within which the shafts 9 do not fall apart from the shaft holder portions 33) is greater than the distance B from the linking portion 35 of each shaft to a failed separation membrane element 1x that is desired to be extracted. If the slide margin A is smaller than the distance B, the shafts 9 will slip down within the module, and will become unable to perform their functions. Incidentally, the unit shaft's length S herein is a length in a direction substantially parallel to the separation membrane module's entire length L, and the separation membrane module's entire length L is a length in a direction substantially parallel to the lengthwise direction of the water collection pipe.

Furthermore, as a different embodiment, two end portions of each shaft 9 can be constructed so that mutually adjacent separation membrane modules 21 are conjoinable. Herein, the construction that makes mutually adjacent shafts 9 conjoinable can be similar to the linking method for the unit shafts 31 described above.

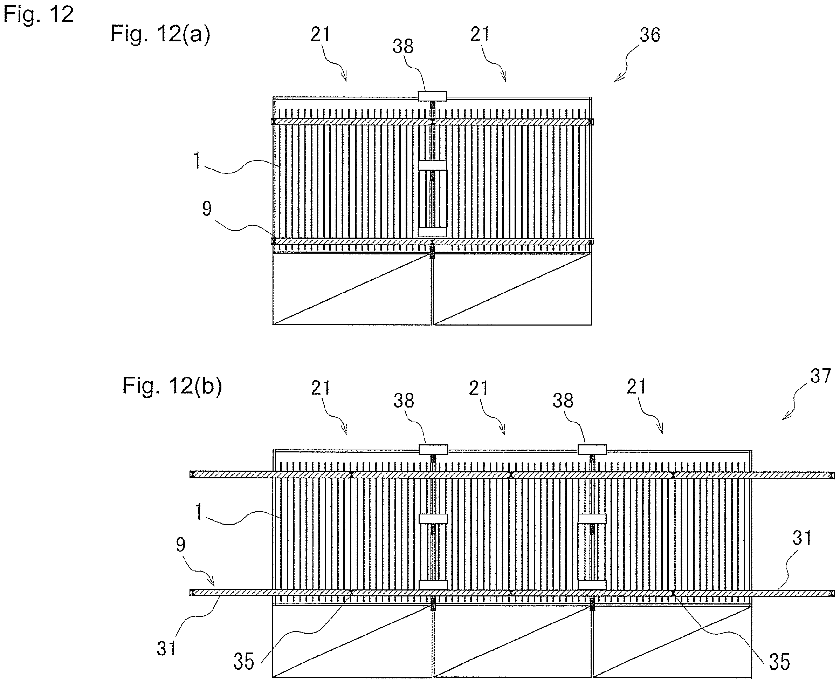

Fig. 12(a) shows a separation membrane module unit 36 where two separation membrane modules 21 constructed by shafts 9 are conjoined, and Fig. 12(b) shows a separation membrane module unit 37 where three separation membrane modules 21 are conjoined. In the separation membrane module unit 37, the shafts 9 related to one separation membrane module are each constructed by two unit shafts 31 linked (N = 2), and the relation among the unit shaft's length S, the number N of unit shafts, and the separation membrane module's entire length L satisfies the relation of S ≥ L/(N - 1). Thus, by connecting the shafts 9 each obtained by linking unit shafts 31, a plurality of separation membrane modules can easily and conveniently be put into a unit.

In the case shown in Fig. 12(a), for example, even when failed separation membrane elements 1 whose separation membranes have broken and whose filtration function has been lost occur at two ends of each separation membrane module 21, the membrane elements can easily and conveniently be extracted by sliding the shafts 9. The spaces formed after the extraction are allowed to be reloaded with new or repaired membrane elements; alternatively, spacers represented by shims, washers, etc. can be loaded. That is, it becomes possible to easily and conveniently perform maintenance of the membrane elements at the two ends without a need to disassemble the whole separation membrane module unit 36. Furthermore, connecting another shaft to either one of the end portions of a shaft 9 makes it possible to slide an existing shaft linking portion 35 to the vicinity of a broken element.

In the case shown in Fig. 12(b), due to the prescription of S ≥ L/(N - 1), spaces occur on the two sides of the separation module 21; however, by loading a plurality of separation membrane elements 1 that accord with the spaces and clearance holder members 28, a separation membrane module unit can be constructed without lowering the filling factor of membrane elements.

Furthermore, in this case, for example, even when a separation membrane element 1 whose separation membrane has broken and whose filtration function has disappeared occurs at an arbitrary location in the separation membrane module unit 37, the separation membrane element can easily and conveniently be extracted by sliding the linking portions 35 of shafts 9 to the vicinity of the broken element and releasing the linking portion 35. The spaces formed after the extraction are allowed to be reloaded with a new or repaired membrane element as described above; alternatively, spacers represented by shims, washers, etc. can be loaded. That is, it becomes possible to easily and conveniently perform maintenance of an arbitrary membrane element without a need to disassemble the whole separation membrane module unit.

In the method of attaching/detaching a separation membrane element from the separation membrane module of the invention, separation membrane elements can individually attached and detached by sliding (moving) the linking portion of each shaft to a neighborhood of a separation membrane element to be attached/detached, separating the linking portion of the shaft, and inserting/withdrawing a suspension portion of the separation membrane element over/from a separated end portion of the linking portion. Due to this, maintenance of the separation membrane module, that is, the replacement or extraction of a failed membrane element can easily be performed.

Furthermore, when each of the separation membrane module units 36, 37 shown in Figs. 12(a) and 12(b) is immersed in an immersion tank, operation with a heavy machine is needed. In this case, because shaft linking alone achieves only low joint strength, it is appropriate to use linking members 38 to join casings 32 to each other. Although it is no problem that a joining method for linking members 38 and casings is arbitrarily employed, a bolt-nut method that uses an angle member or a plate made of stainless steel, or the like, is preferable.

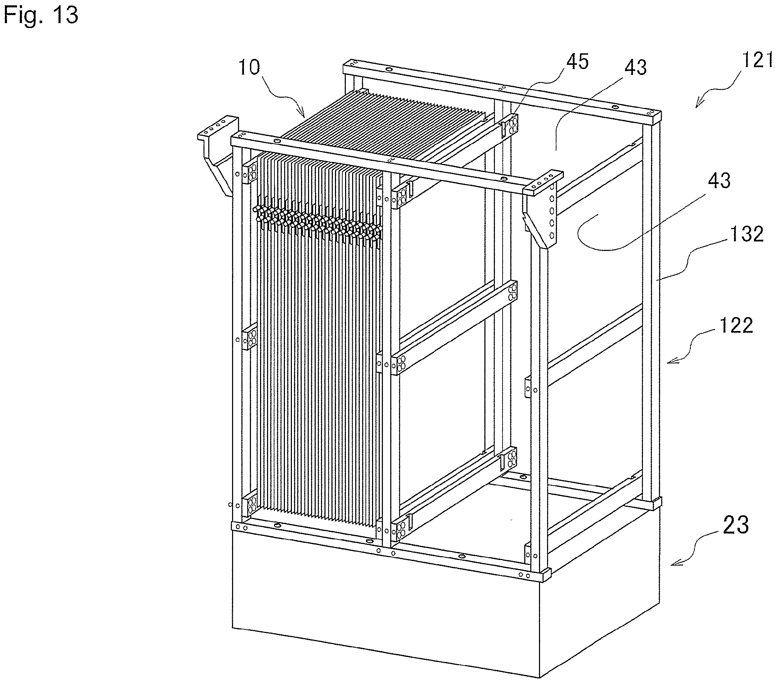

Next, Fig. 13 is a perspective view showing a different example of an embodiment of the separation membrane module of the invention.

In Fig. 13, a separation membrane module 121 has a construction generally similar to that of the separation membrane module 21 shown in Fig. 9. However, the separation membrane module 121 is equipped with a casing 132 capable of housing a plurality of element units 10. The separation membrane module 121 is constructed of an element block 122, an aeration block 23 and a water collection pipe (not shown). The element block 122 is constructed of the element units 10 and the casing 132 that houses the element units 10 so that the element units 10 can be taken out and put in. The aeration block 23 is disposed below the element block 122. The aeration block 23 is constructed of an air diffuser device (not shown) that is linked to a blower (not shown). Air is jetted toward the element block 122 of the separation membrane module 121 sunk in water to be treated within a bio-reactor tank, from the aeration block 23 provided below.

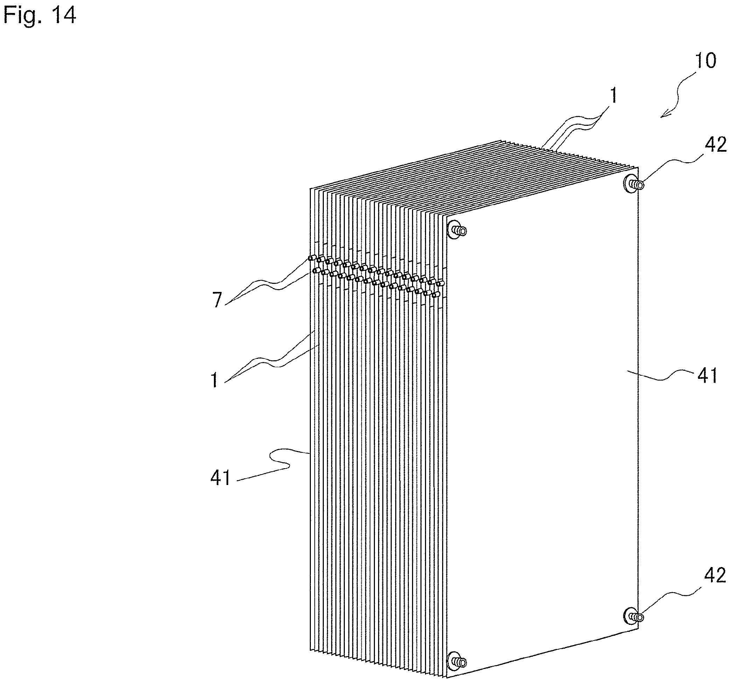

Fig. 14 is a perspective view showing an example of an embodiment of an element unit 10 applied to the separation membrane module 121 shown in Fig. 13.

The element unit 10 is constructed by placing in parallel a plurality of separation membrane elements 1, with shafts inserted through through-holes of the separation membrane elements 1 as described above. Between the adjacent separation membrane elements 1, clearance holder members 28 (Fig. 9) are provided in order to secure flow paths of water to be treated and air.

Furthermore, water collection nozzles 7 are arranged on side surfaces of the separation membrane elements 1 so as not to interfere with positions of the through-holes 8. The expression "so as not to interfere" means that the water collection nozzles 7 are provided so as to be apart from the through-holes 8, that is, provided at positions different from those of the through-holes 8. While the water collection nozzles 7 communicate with the water collection flow paths 5, the through-holes 8 are preferred to be segregated from the water collection flow paths 5 by sealed portions 2 or resin portions 4' or the like, in order to prevent leakage of permeate water (Fig. 7(a) and Fig. 7(b)). Hence, the water collection nozzles 7 and the through-holes 8 are preferred to be provided so as to be apart from each other.

Each of two end portions of the element unit 10 is provided with a side plate 41, taking into consideration the handling characteristic or the like at the time of housing the element unit 10 in the casing 132. Furthermore, fixture members 42 for fixing these various members are provided on the shafts 9 or the side plate 41 portions.

Although the number of separation membrane elements 1 that constitute the element unit 10 can be set arbitrarily to 10 to 150, the number thereof is preferred to be 20 to 50, taking into consideration the handling characteristic at the time of taking the element unit 10 out of and putting it into the casing 132. Although the shape of the membrane element is not particularly limited, a generally quadrangular membrane element is suitably used.

Suspension portions and the clearance holder members 28 of the separation membrane element 1 are as described above.

Although the thickness of the side plates 41 is not particularly limited, it suffices that the thickness thereof is 2 to 10 mm, and a range of 2 to 5 mm is suitably employed, taking into consideration the increasing of the filling factor of the separation membrane elements 1. Although it is no problem that the shape of the side plate 41 is arbitrary, a flat bar (flat steel) free from protuberances and the like that pose possibility of damaging a membrane surface of a membrane element adjacent to a side plate 41 when the adjacent membrane element oscillates and contacts the side plate 41 due to aeration air is preferable.

Furthermore, taking into consideration the handling characteristic at the time of housing the element unit 10 into the casing 132, each side plate 41 is provided with a handle (not shown). It suffices that the shape of the handle is arbitrary. A handle may be formed by cutting out an arbitrary shape, such as an ellipse, a generally quadrangular shape, etc., from the side plate, or a handle constructed of a member of a metal or the like may be separately installed on a side plate 41. The materials of the side plate 41 and the handle can be arbitrarily selected from various kinds of metals, such as stainless steel and aluminum, various kinds of thermoplastic resins, such as PP resin, PVC resin and ABS resin, various kinds of thermosetting resins, such as polyurethane resin and epoxy resin, etc.; however, PP resin is suitably used, from the viewpoint of corrosion resistance, weight and abrasion resistance.

With regard to the fixture portions, in Fig. 14, end portions of the shafts 9 are provided with a screw structure, and the two end portion of each shaft are fixed by fastening them with fixture members 42, such as fastening nuts, via a plurality of separation membrane elements 1 and the side plates 41. Different fixture methods may also be arbitrarily selected, such as set fastening with a collar or the like, the groove cutting on the shaft portion and the use of C-shaped or E-shaped stopper rings, etc. From the view point of being able to simplify the construction and restrain the production cost, a method of fixing screw portions of end portions of the shafts 9 by nut fastening can be suitably used. In this case, the end portions of the shafts 9 must be provided with a screw structure, but the screw structure may be a whole-screw structure represented by a stud bolt or the like, or may also be a structure in which only the shaft end portions are threaded. Furthermore, the fixture members 42, such as nuts, may be directly joined to the shafts 9 or the side plates 41, or may also be separate therefrom.

The casing 132 has, in at least one of an upper surface and a side surface thereof, an opening portion 43 through which the element unit 10 can be taken out of and put into the casing 132. Due to adoption of this structure, each element unit 10 is allowed to be separately attached into and detached from the casing 132, so that replacement or extraction of membrane elements and maintenance can easily be performed. Furthermore, since the separation membrane element 1 constructed mainly of the element unit 10 has a structure without a support plate, the weight of the separation membrane element 1 is as light as about 100 to 500 g, and the weight of a unit of separation membrane elements 1 is about 5 to 25 kg (dry weight/in the case of 50 sheets of membrane elements). Therefore, element units can easily be taken out of and put into the casing without using a heavy machine or the like, which makes a great advantage at the time of replacement or extraction of membrane elements and maintenance.

The distance of air space between the element unit 10 and the opening portion 43 is not particularly limited as long as the distance provides an interval that allows the element unit 10 to be taken out and put in through the opening portion 43; for example, the distance thereof can be 2 to 10 mm. Taking into consideration the increasing of the filling factor of the separation membrane elements 1, a distance of 2 to 5 mm is further preferable.

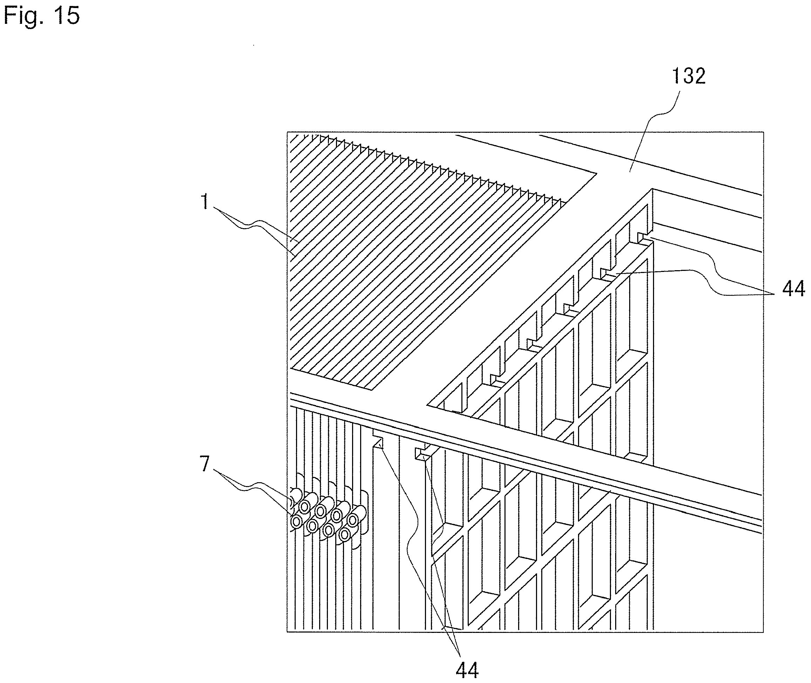

Furthermore, it is preferable that, as shown in Fig. 15, the casing 132 be provided with groove guides 44 (cutout guides) through which end portions of the shafts 9 or the fixture members 42 are caused to pass when the element unit 10 is taken out or put in. This arrangement provides positioning sites at the time of suspending the element unit 10, and also improves the handling characteristic. Furthermore, it also becomes possible to reduce the distance of air space between the element unit 10 and the opening portion 43; therefore, the filling factor of separation membrane elements 1 can be further increased.

The casing 132 has unit suspension portions that allow the element unit 10 to be suspended by utilizing the shafts 9. Concretely, it is appropriate that, as shown in Fig. 13, surfaces of frames of the casing 132 that are orthogonal to shafts 9 are provided with recess portions 45, and the shafts 9 fitted in the recess portions 45 are held by pressing the shafts 9 from above with shaft presser devices (not shown). However, the construction of the unit suspension portions is not limited to this, and holding methods commensurate with other suspension constructions as shown in Fig. 8 can also be arbitrarily selected.

The materials of main structural members that constitute the casing 132, including the frame, the shaft presser devices, etc., can be arbitrarily selected from various kinds of metals, such as stainless steel and aluminum, various kinds of thermoplastic resins, such as PP resin, PVC resin and ABS resin, various kinds of thermosetting resins, such as polyurethane resin and epoxy resin, etc.

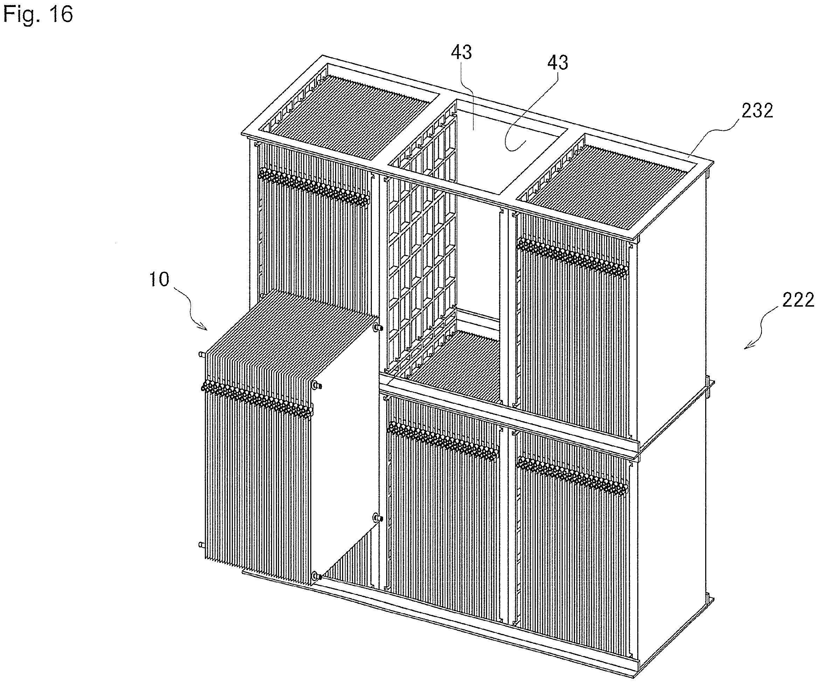

Fig. 16 is a perspective view showing a different example of an embodiment of the separation membrane module of the invention.

A casing 232 has a structure in which a plurality of element units 10 can be loaded in vertical or horizontal directions. The element units are disposed at such positions that the element units can be extracted in substantially horizontal or vertical directions via a plurality of opening portions 43. Although Fig. 16 shows an example in which three juxtaposed element units are disposed in each of two stages in a vertical direction, the embodiment is not particularly limited to this structure, but can be arbitrarily set according to the size of the tank for immersion, the required treatment capabilities, etc. In particular, when element units are loaded in multiple stages in a vertical direction, space saving can be achieved, and the membrane area per unit area occupied by aerating air that is diffused from below the element units can be considerably increased, so that energy saving can also be achieved.

In this embodiment, an element block 222 is constructed by disposing a single or a plurality of element units 10 in a casing 232 so that each element unit 10 can be individually taken out and put in via the opening portions 43 that are provided side by side and in multi-stages in a vertical direction within the casing 232. Therefore, since the element units 10 can be individually taken out and put in easily and conveniently without involving a troublesome disconnecting operation within the element block 222, the ease of operation at the time of replacement of membranes and maintenance can be improved, and the working hours can be considerably reduced. Furthermore, since the separation membrane elements 1 have a structure without a support plate, it is possible to achieve a considerable weight reduction even in the case where the separation membrane elements 1 are put together as a unit, compared with conventional separation membrane elements provided with support plates; therefore, the structure of the frame that constitutes the casing 232 can be simplified, and the production cost as a module can be considerably reduced.

### Example

Separation membrane modules each housing an element unit constructed by arranging 100 separation membrane elements that were separation membrane elements having support plates made of ABS resin as conventional products or that were separation membrane elements having a construction of the invention were manufactured and compared. Results are presented in Table 1. Incidentally, the kind and the flat surface size (0.5 m × 1.4 m) of separation membranes used were the same.

The separation membrane elements having the construction of the invention had a configuration schematically shown in Fig. 1, with the resin portions formed in a cylindrical shape having a diameter of about 3.0 mm and a height of about 2.5 mm. The peripheral edge of each separation membrane was sealed by a sealed portion having a width of about 20 mm, and a water collection portion having a width of about 35 mm was formed in a portion of the peripheral edge so that the water collection portions were at such a combination of positions that the water collection portions of adjacent separation membrane elements did not overlap with each other. After a water collection nozzle made of polyethylene resin and having a configuration shown in Fig. 3 was inserted into the water collection portions, the sealing was performed.

The element units having the construction of the invention were manufactured by forming through-holes (a diameter of about 20 mm) in end portions of each of the separation membrane elements, and inserting insert rods through the through-holes while arranging the separation membrane elements so that adjacent water collection nozzles did not overlap.

As is apparent from results shown in Table 1, in the separation membrane elements of the invention, the thickness of the elements was a half and the weight of the elements was a quarter, compared with the conventional separation membrane elements. Furthermore, the separation membrane module as a whole weighed a quarter or less. Furthermore, with regard to the casing supporting a bundle of separation membrane elements, it was possible to reduce the weight to about a fifth. By reducing the weight of the separation membrane elements, simplification of the casing was achieved. Finally, with regard to the filling factor of membranes, the membrane filling factor in the separation membrane modules of the invention was 1.3 times, compared with the conventional separation membrane modules. This is because the separation membrane elements were thinner and, furthermore, water collection nozzles were disposed so that the nozzles did not interfere.

**[Table 1]**

| | Conventional product (with support plate (ABS)) | Invention (without support plate) |
|---|---|---|
| Membrane element's size | 0.5 m × 1.4 m | 0.5 m × 1.4 m |
| Membrane elements thickness | 6.0 m | 3.0 mm |
| Weight of 1 membrane element | 4.8 kg | 1.2 kg |
| Membrane module's weight (100-piece type) | 630 kg (including 150 kg for casing) | 150 kg (including 30 kg for casing) |
| Comparison in membrane filling factor (index) | 100 | 130 |

Incidentally, regarding the durability of the separation membrane module, from results of actual several-month operation of an MBR-dedicated working module in which the separation membrane elements (support plate-less elements) of the invention were disposed, the support plate-less elements were able to allow energy of aeration to escape favorably, and the separation membrane elements did not break.

### Explanation of numerals

1: separation membrane element
1x: failed separation membrane element
2: sealed portion
3: water collection portion
4: resin portion
5: water collection flow path
6: separation membrane
7: water collection nozzle
8: through-hole
9: shaft
10: element unit
11: oblique side
21: separation membrane module
22: element block
23: aeration block
26: tube
27: water collection pipe
28: clearance holder member
31: unit shaft
32: casing
33: shaft holder portion
34: shaft joint
35: shaft linking portion
36: membrane module unit
37: membrane module unit
38: linking member
L: membrane's moduel's entire length
S: unit shaft's length
A: slide margin
B: distance from a shaft linking portion to a membrane element desired to be extracted
41: side plate
42: fixture member
43: opening portion
44: groove guide
45: recess portion
51: protruded portion
52: cutout portion
121: separation membrane module
122: element block
132: casing
222: element block
232: casing

## Claims

1. An element unit (10) comprising:
shafts (9);
a plurality of separation membrane elements (1) each including a separation membrane pair having two flat separation membranes (6, 6) disposed so that permeate-side surfaces of the separation membranes (6, 6) face each other and a water collecting flow path (5) provided between the separation membranes (6, 6), and a sealed portion (2) that seals the separation membranes (6, 6) at peripheral edge portions of the separation membranes (6, 6);
a suspension portion (8, 51, 52) that suspends the separation membrane elements (1) on the shaft (9); and
a water collection nozzle (7) that provides communication between the water collection flow path (5) and an outside of the separation membrane elements (1)
wherein each of the separation membrane elements (1) comprises a resin portion (4) that adheres to both the permeate-side surfaces of the separation membrane pair (6, 6) facing each other so that a predetermined space of 500 µm to 5000 µm is secured which forms the water collection flow path (5),
wherein the resin portion (4) is in a dot shape, a linear shape or a grid shape,
wherein a projected image of the resin portion (4) on the separation membranes (6, 6) is discontinuous,
wherein in the separation membrane pair (6, 6), an outward side that is more outward in a planer direction of the separation membranes (6, 6) than the water collection flow path (5) is provided with a through-hole (8) through which a shaft (9) is able to extend, and wherein the through hole (8) functions as the suspension portion (8, 51, 52), and
wherein through-holes 8 are disposed at four locations near end portions or near corner portions of each separation membrane element 1.

2. The element unit according to claim 1, wherein the shaft (9) comprises a plurality of unit shafts (31).

3. The element unit according to claim 2,
wherein the shaft (9) further comprises a shaft joint (34) that connects mutually adjacent unit shafts (31).

4. The element unit according to any one of claims 1 to 3,
wherein the shaft (9) is provided so as to extend through the suspension portion (8, 51, 52), and
wherein the separation membrane element (1) is attachable to and detachable from the shaft (9) by inserting and removing the separation membrane element (1) into and from the suspension portion (8, 51, 52) for the shaft (9).

5. A separation membrane module (21) comprising:
the element unit (10) according to any one of claims 1 to 4;
a casing (32) that houses the element unit (10) so as to allow the element unit (10) to be taken out and put in; and
an aeration block that is disposed below the casing (32) and that supplies air to the element unit (10).

6. The separation membrane module (21) according to claim 5,
wherein the casing (132) has, on at least one of an upper surface and a side surface, an opening portion (43) which the element unit (10) is able to be taken out from and inserted into.

7. A method for attaching and detaching a separation membrane element (1) comprising
providing the separation membrane module (121) according to claim 5 or 6 that includes shafts (9) provided so as to extend through the suspension portion (8, 51, 52),
the attaching and detaching method for a separation membrane element (1) being **characterized in that** a separation membrane element (1) is attached to and detached from the separation membrane module (121) by inserting and removing a separation membrane element (1) into and from the suspension portion by sliding the shafts (9).

## Patentansprüche

1. Elementeinheit (10), umfassend:
Wellen (9);
eine Vielzahl von Trennmembranelementen (1), enthaltend jeweils ein Trennmembranpaar mit zwei flachen Trennmembranen (6, 6), die so angeordnet sind, dass permeatseitige Oberflächen der Trennmembranen (6, 6) einander zugewandt sind, und einen Wassersammelströmungsweg (5), der zwischen den Trennmembranen (6, 6) vorgesehen ist, und einen abgedichteten Abschnitt (2), der die Trennmembranen (6, 6) an peripheren Randabschnitten der Trennmembranen (6, 6) abdichtet;
einen Aufhängungsabschnitt (8, 51, 52), der die Trennmembranelemente (1) an der Welle (9) aufhängt; und
eine Wassersammeldüse (7), die eine Kommunikation zwischen dem Wassersammelströmungsweg (5) und einer Außenseite der Trennmembranelemente (1) bereitstellt,
wobei jedes der Trennmembranelemente (1) einen Harzabschnitt (4) aufweist, der an beiden einander zugewandten permeatseitigen Oberflächen des Trennmembranpaars (6, 6) haftet, so dass ein vorbestimmter Raum von 500 µm bis 5000 µm sichergestellt ist, der den Wassersammelströmungsweg (5) bildet,
wobei der Harzabschnitt (4) eine Punktform, eine lineare Form oder eine Gitterform aufweist,
wobei ein projiziertes Bild des Harzabschnitts (4) auf die Trennmembranen (6, 6) diskontinuierlich ist,
wobei in dem Trennmembranpaar (6, 6) eine Außenseite, die sich in einer ebenen Richtung der Trennmembranen (6, 6) weiter außen befindet als der Wassersammelströmungsweg (5), mit einem Durchgangsloch (8) versehen ist, durch das sich eine Welle (9) erstrecken kann, und wobei das Durchgangsloch (8) als Aufhängungsabschnitt (8, 51, 52) fungiert, und
wobei Durchgangslöcher (8) an vier Stellen nahe Endabschnitten oder nahe Eckabschnitten jedes Trennmembranelements 1 angeordnet sind.

2. Elementeinheit nach Anspruch 1,
wobei die Welle (9) eine Vielzahl von Welleneinheiten (31) aufweist.

3. Elementeinheit nach Anspruch 2,
wobei die Welle (9) ferner ein Wellengelenk (34) aufweist, das miteinander benachbarte Welleneinheiten (31) verbindet.

4. Elementeinheit nach einem der Ansprüche 1 bis 3,
wobei die Welle (9) so vorgesehen ist, dass sie sich durch den Aufhängungsabschnitt (8, 51, 52) erstreckt, und
wobei das Trennmembranelement (1) an der Welle (9) durch Einsetzen und Entfernen des Trennmembranelements (1) in und von dem Aufhängungsabschnitt (8, 51, 52) an der Welle (9) anbringbar und von dieser abnehmbar ist.

5. Trennmembranmodul (21), umfassend:
die Elementeinheit (10) nach einem der Ansprüche 1 bis 4;
ein Gehäuse (32), in dem die Elementeinheit (10) so untergebracht ist, dass die Elementeinheit (10) herausgenommen und eingesetzt werden kann; und
einen Belüftungsblock, der unterhalb des Gehäuses (32) angeordnet ist und der Elementeinheit (10) Luft zuführt.

6. Trennmembranmodul (21) nach Anspruch 5,
wobei das Gehäuse (132) an mindestens einer oberen Oberfläche und einer Seitenfläche einen Öffnungsabschnitt (43) hat, über den die Elementeinheit (10) herausgenommen und eingesetzt werden kann.

7. Verfahren zum Anbringen und Abnehmen eines Trennmembranelements (1), umfassend das Bereitstellen des Trennmembranmoduls (121) nach Anspruch 5 oder 6, das Wellen (9) enthält, die so vorgesehen sind, dass sie sich durch den Aufhängungsabschnitt (8, 51, 52) erstrecken,
wobei das Anbringungs- und Abnahmeverfahren für ein Trennmembranelement (1) **dadurch gekennzeichnet ist, dass** ein Trennmembranelement (1) an das Trennmembranmodul (121) angebracht und von diesem abgenommen wird, indem ein Trennmembranelement (1) durch Schieben der Wellen (9) in den Aufhängungsabschnitt eingesetzt und von diesem entfernt wird.

## Revendications

1. Unité d'éléments (10) comprenant :
des arbres (9) ;
une pluralité d'éléments à membranes de séparation (1) comportant chacun une paire de membranes de séparation ayant deux membranes de séparation plates (6, 6) disposées de sorte que des surfaces latérales imprégnées des membranes de séparation (6, 6) soient tournées l'une vers l'autre et un trajet d'écoulement de collecte d'eau (5) prévu entre les membranes de séparation (6, 6), et une partie étanche (2) qui assure l'étanchéité des membranes de séparation (6, 6) au niveau de parties de bord périphérique des membranes de séparation (6, 6) ;
une partie de suspension (8, 51, 52) qui suspend les éléments à membranes de séparation (1) à l'arbre (9) ; et
une buse de collecte d'eau (7) qui assure la communication entre le trajet d'écoulement de collecte d'eau (5) et l'extérieur des éléments à membranes de séparation (1)
dans laquelle chacun des éléments à membranes de séparation (1) comprend une partie en résine (4) qui adhère aux deux surfaces latérales imprégnées de la paire de membranes de séparation (6, 6) tournées l'une vers l'autre de sorte qu'un espace prédéterminé allant de 500 µm à 5000 µm qui forme le trajet d'écoulement de collecte d'eau (5) soit assuré,
dans laquelle la partie en résine (4) a une forme de point, une forme linéaire ou une forme de grille,
dans laquelle une image projetée de la partie en résine (4) sur les membranes de séparation (6, 6) est discontinue,
dans laquelle, dans la paire de membranes de séparation (6, 6), un côté extérieur qui est plus à l'extérieur dans une direction plane des membranes de séparation (6, 6) que le trajet d'écoulement de collecte d'eau (5) est pourvu d'un trou traversant (8) à travers lequel un arbre (9) est capable de s'étendre, et où le trou traversant (8) fonctionne comme la partie de suspension (8, 51, 52), et
dans laquelle les trous traversants 8 sont disposés à quatre emplacements près des parties d'extrémité ou près des parties de coin de chaque élément à membranes de séparation 1.

2. Unité d'éléments selon la revendication 1,
dans laquelle l'arbre (9) comprend une pluralité d'arbres unitaires (31).

3. Unité d'éléments selon la revendication 2,
dans laquelle l'arbre (9) comprend en outre un joint d'arbre (34) qui relie des arbres unitaires mutuellement adjacents (31).

4. Unité d'éléments selon l'une quelconque des revendications 1 à 3,
dans laquelle l'arbre (9) est prévu de manière à s'étendre à travers la partie de suspension (8, 51, 52), et
dans laquelle l'élément à membranes de séparation (1) peut être fixé à et détaché de l'arbre (9) en insérant l'élément à membranes de séparation (1) dans la partie de suspension (8, 51, 52) pour l'arbre (9) et en le retirant de celle-ci.

5. Module de membranes de séparation (21) comprenant :
l'unité d'éléments (10) selon l'une quelconque des revendications 1 à 4 ;
un boîtier (32) qui reçoit l'unité d'éléments (10) de manière à permettre à l'unité d'éléments (10) d'être enlevée et mise en place ; et
un bloc d'aération qui est disposé sous le boîtier (32) et qui fournit de l'air à l'unité d'éléments (10).

6. Module de membranes de séparation (21) selon la revendication 5,
dans lequel le boîtier (132) a, sur au moins l'une d'une surface supérieure et d'une surface latérale, une partie d'ouverture (43) de laquelle l'unité d'éléments (10) peut être enlevée et dans laquelle elle peut être insérée.

7. Procédé pour fixer et détacher un élément à membranes de séparation (1) comprenant le fait de fournir le module de membranes de séparation (121) selon la revendication 5 ou 6 qui comporte des arbres (9) prévus de manière à s'étendre à travers la partie de suspension (8, 51, 52),
le procédé de fixation et de détachement pour un élément à membranes de séparation (1) étant **caractérisé en ce qu'**un élément à membranes de séparation (1) est fixé au module de membranes de séparation (121) et détaché de celui-ci en insérant un élément à membranes de séparation (1) dans la partie de suspension et en le retirant de celle-ci en faisant coulisser les arbres (9).
